# EUROPEAN PATENT SPECIFICATION

(11) **EP 0 943 582 B1**
(45) Date of publication and mention of the grant of the patent: **23.06.2004**
(21) Application number: 99105463.6
(22) Date of filing: 17.03.1999
(51) Int. Cl.: B66F 9/24, B66F 9/075

(54) **Position detector for industrial vehicles**
Positionsdetektor für Industriefahrzeuge
Détecteur de position pour véhicules industriels

(30) Priority: 18.03.1998 JP 6847198
(43) Date of publication of application: 22.09.1999
(73) Proprietor: Kabushiki Kaisha Toyota Jidoshokki, Kariya-shi, Aichi-ken (JP)
(72) Inventor: Kamiya, Toshikazu, Kariya-shi, Aichi-ken (JP)
(74) Representative: Leson, Thomas Johannes Alois, Dipl.-Ing.

(56) References cited:
- US-A- 3 107 750
- US-A- 3 630 317
- US-A- 4 231 450

## Description

### BACKGROUND OF THE INVENTION

The present invention relates to a detector for detecting the position of forks in industrial vehicles such as forklifts. More specifically, the present invention pertains to a technology for detecting abnormalities in wires that transmit position detection signals.

In industrial vehicles such as forklifts, a pair of inner masts is supported in a pair of outer masts. The inner masts slide up and down in the outer masts and a fork moves with the inner masts. In such forklifts, various controls are performed in accordance with the position of the fork. For example, the fork may be automatically stopped at a position set in advance. The rear axle is pivotally supported for improved driving performance. When the fork is raised high and the center of gravity of the vehicle is high, the pivoting movement of the rear axle is restricted to improve stability.

Generally, a reel-type sensor is used to continuously detect the height of fork. The reel-type sensor detects the rotation of a reel, which winds and unwinds a wire in accordance with the movement of the fork, to determine the fork height. Alternatively, switch-type sensors may be used to intermittently detect the height of the fork. A plurality of switch-type detectors is installed on the outer masts, spaced at a certain distance from one another. A dog is attached to the inner masts to actuate the switches. The number of detectors turned on in accordance with the height of the inner masts changes. Accordingly, the height of forklift is intermittently detected based on the on-off state of the detectors.

Whether to continuously detect or intermittently detect the fork height is determined by the kind of control performed. For example, detecting only three height zones, that is, a lower zone, a middle zone, and a high zone may be sufficient. In this case, an inexpensive switch-type sensor is preferred over a more costly reel-type sensor.

When switch-type detectors are used, a plurality of switch-type detectors are arranged vertically on the outer masts with a predetermined distance from one another. Wires from each switch-type detector extend along the outer masts. However, when the wires slacken by the movement of the inner masts, the wires may be caught and cut by the inner masts. The cut wires may be short-circuited by touching the masts or the vehicle body. This is likely to cause abnormalities in the electrical system.

Such abnormalities must be detected quickly. However, in prior art apparatuses that detect the height in accordance with the on-off state of the switch-type detectors, abnormalities such as a cut line and a short circuit cannot be detected. Therefore, as a safety measure, the signal input to the controller when the fork is at the highest position is made to be the same as that when there is a cut wire. In this way, when a wire is cut, the control used when the fork is at the highest position is performed. When the fork is at the highest position, the center of the gravity of the vehicle is high, which lowers the stability of the vehicle. Thus, if a wire is cut, the control procedure for stabilizing the vehicle is performed at all times.

This safety measure does not detect cut wires and is not a fully satisfactory solution. If an operator does not notice the abnormality, proper control in accordance with the fork height is not performed, which lowers the performance of the forklift.

When the number of wires extending from the switch-type detector is large, a wire is more likely to be cut. Further, a controller needs many input terminals. Therefore, it is desirable to reduce the number of wires employed with the switch-type detectors.

Document US 3 107 750 describes an apparatus for detecting the position of a movable body. In particular, this document describes a load handling apparatus, in which sensing units are provided for detecting the height of a load carrier. Each of the sensing units comprises a switch.

### SUMMARY OF THE INVENTION

The objective of the present invention is to provide a position detector that detects disorders such as cut wires and short-circuit. Another objective of the present invention is to provide a position detector that has a small number of wires as possible.

This object is solved by an apparatus for detecting the position of a movable body as set out in the independent claim 1.

Further advantageous developments are set out in the dependent claims.

In particular, in order to achieve the above objective, the present invention provides an apparatus for detecting the position of a movable body provided on an industrial vehicle. The movable body moves on a predetermined path, and the apparatus detects the passage of the movable body on the path. The apparatus has the following structure. The apparatus includes a switch or a plurality of switches. Each switch has two states, and each switch is associated with a location on the path. Passage of the movable body by the location changes the state of the associated switch. A position judging means having a plurality of input terminals. The number of the plurality of input terminals is more than the number of switches by at least one. Each switch is connected to at least one of the plurality of input terminals. Each of the plurality of terminals is associated with the switch or one of the switches. Signals at the input terminals have two states in accordance with the state of the associated switch. The judging means includes position judging data, wherein a relationship between zones of movement of the movable body and combinations of signal states at the input terminals is defined by the data. The judging means judges that the position of the movable body is within one of the zones in accordance with the data when the combination of the signals at the input terminal exists in the data. The judging means judges that there is an abnormality when the combination of signals at the input terminal does not exist in the judging data.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is an electric circuit of a detector according to a first embodiment of the present invention;
Fig. 2 is a data table showing the relationship between the fork height and the combination of signals to a controller;
Fig. 3(a) is a partial side elevation view showing the detector of Fig. 1 from the inside of a mast;
Fig. 3(b) is a view like Fig. 3(a) showing actuation of a sensor 7.
Fig. 4 is a partially cut-away perspective view of a detector according to Fig.3;
Fig. 5 is a side elevation of a forklift;
Fig. 6 shows an electric circuit of a detector according to a second embodiment of the present invention;
Fig. 7 is a data table showing the relationship between the fork height and the combination of signals to a controller;
Fig. 8 shows an electric circuit of a detector according to a third embodiment of the present invention; and
Fig. 9 is a data table showing the relationship between the fork height and the combination of signals to a controller.

### DETAILED DESCRIPTION OF THE PREFERRED EMBODIMENTS

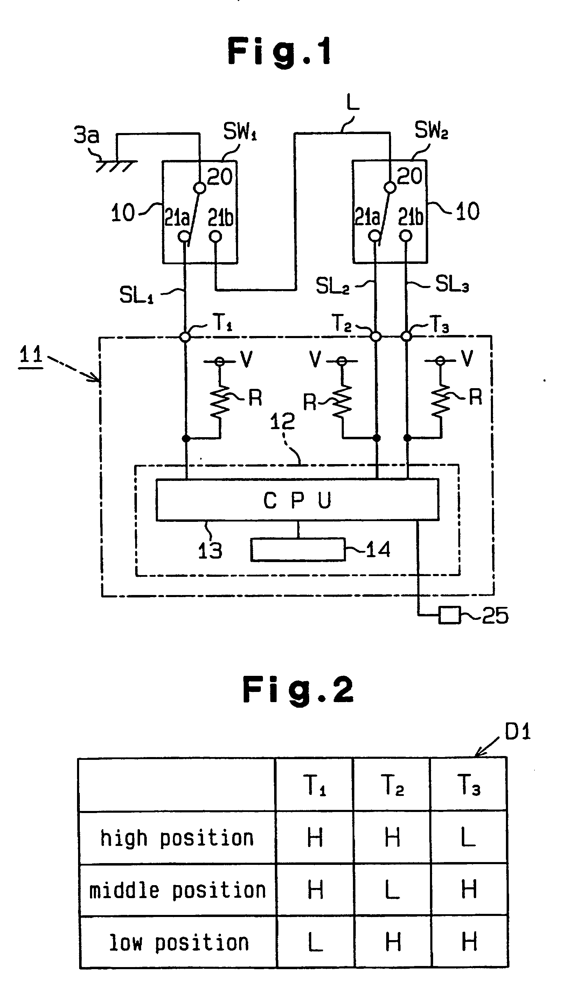

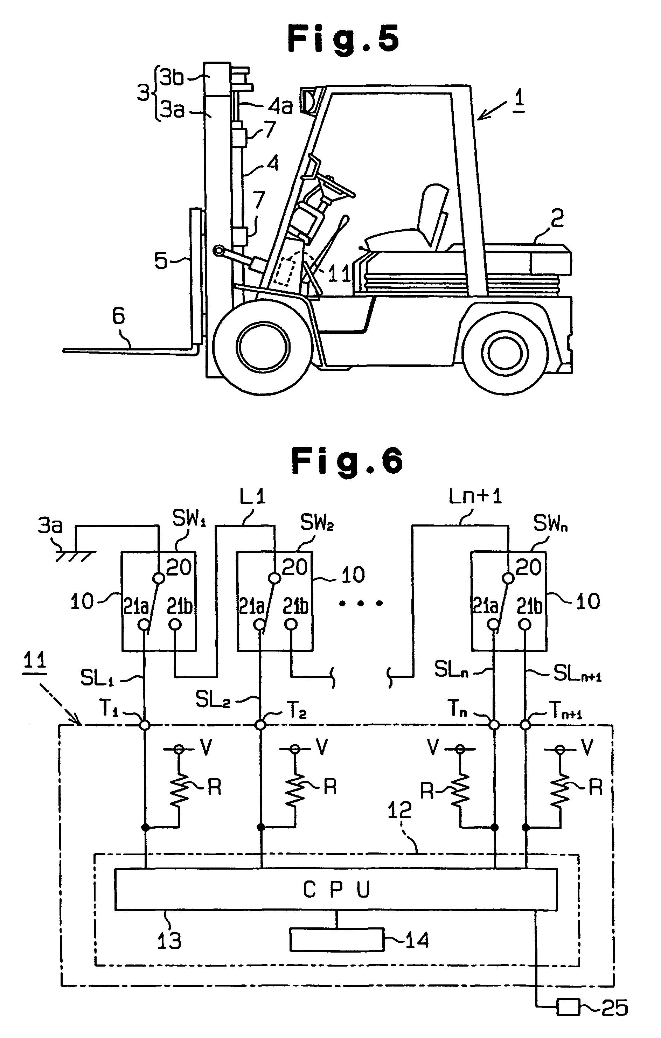

A forklift according to a first embodiment of the present invention will now be described in reference to Figs. 1-5. As shown in Fig. 5, masts 3 are provided at the front portion of a vehicle body 2 of a forklift 1. The masts 3 include a pair of outer masts 3a, which are pivotally supported by the vehicle body 2, and a pair of inner masts 3b, which are located in the outer masts 3a so as to move up and down. The inner masts 3b are connected to the top end of a piston rod 4a of a lift cylinder 4. Chains (not shown) are installed to chain wheels (not shown), which are supported on the top ends of the inner masts 3b. A lift bracket 5, which is installed along the inner masts 3b to move up and down, is hung from the chains. A fork 6 for carrying loads is installed to the front side of the lift bracket 5. The expansion and contraction of the lift cylinder 4 moves the fork 6 up and down by a distance, for example, that is two times the stroke of the inner masts 3b.

Two height sensors 7 are installed at positions on one of the outer masts 3a. The sensors 7 are spaced apart and are at predetermined locations. Each sensor 7 outputs either a high level signal or a low level signal according to whether it contacts the inner mast 3b. Based on signals from the sensors 7, the fork is judged to be in one of three zones, that is, a low zone, a middle zone, and a high zone.

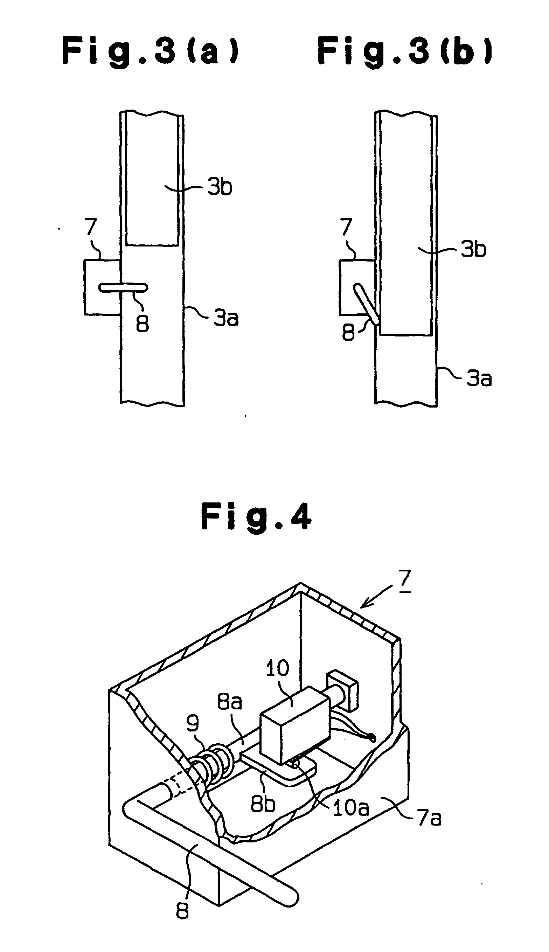

As shown in Fig. 4, each height sensor 7 includes an L shaped lever 8, which is pivotally supported in a housing 7a. The lever 8 is urged in one rotational direction (counterclockwise in Fig. 4) by a spring 9.

A switch 10 having a detection member 10a is provided in the housing 7a. A detection plate 8b extends from a shaft 8a of the lever 8 in the housing 7a. When the detection plate 8b abuts the detection member 10a, the lever 8 is prevented from pivoting further counterclockwise and is retained at a position perpendicular to the longitudinal axis of the outer mast 3a as shown in Fig. 3(a) and Fig. 4. The lever 8 can pivot clockwise in the state shown in Fig. 4.

As shown in Figs. 3(a) and 3(b), the height sensors 7 are fixed to the rear surface of the outer mast 3a. The distal end of the lever 8 extends into the path of the inner mast 3b. Accordingly, the lever 8 is engaged by and pivoted by the inner mast 3b. As shown in Fig. 3(a), when the inner mast 3b is disengaged from the lever 8, the lever 8 is returned to the horizontal position of Fig. 3(a) by the spring 9. At this state, the detection plate 8b presses the detection member 10a. As shown in Fig. 3(b), when the inner mast 3b moves down, the mast 3b engages the distal end of the lever 8 and pivots the lever 8 clockwise. This disengages the detection plate 8b from the detection member 10a. In the range of motion between when the lower end of the inner mast 3b engages the lever 8 and when the mast moves to its lowest position, the lever 8 engages the side surface of the inner mast 3b. That is, the detection plate 8b is held away from the detection member 10a.

The switches 10 are contact-type detectors. Each switch 10 is electrically connected to a controller 11 (See Fig. 1), which is located in the vehicle body 2.

Fig. 1 shows an electrical circuit of the position detector. Each switch 10 includes a terminal 20 and first and second contact points 21a, 21b, which are selectively connected to the terminal 20. For convenience, the switch 10 of the lower sensor is referred to as a lower switch SW₁, and the switch 10 of the upper sensor is referred to as an upper switch SW₂.

The terminal 20 of the lower switch SW₁ is grounded to the outer mast 3a. The first contact point 21a of the lower switch SW₁ is connected to a first input terminal T₁ of the controller 11 by a first signal line SL₁. The second contact point 21b of the lower switch SW₁ is connected to the terminal 20 of the upper switch SW₂ by a connecting line L. The first contact point 21a of the upper switch SW₂ is connected to the second input terminal T₂ of the controller 11 by a second signal line SL₂. The second contact point 21b of the upper switch SW₂ is connected to a third input terminal T₃ of the controller 11 by a third signal line SL₃.

The controller 11 includes a computer 12 including a central processing unit (CPU) 13 and a memory 14. A source voltage V is applied between each input terminal T₁-T₃ and the CPU 13 through resistors R.

The upper and lower switches SW₁, SW₂ selectively ground one of signal lines SL₁-SL₃, which are connected the input terminals T₁-T₃, respectively, to the outer mast 3a. When a signal line SL₁-SL₃ is not grounded, the source voltage V is applied to the corresponding input terminal T₁-T₃ through a corresponding resistor R, and the potential at the corresponding input terminal T₁-T₃ is positive. When a signal line SL₁-SL₃ is grounded to the outer mast 3a, current flows to the outer mast 3a and the potential at the corresponding input terminal T₁-T₃ becomes substantially zero. The CPU 13 detects the changes of potential in each input terminal T₁-T₃ as the input signal level changes. In other words, the CPU 13 receives a high level or a low level signal through each input terminal T₁-T₃, in accordance with the potential at each input terminal T₁-T₃.

As shown in Fig. 2, the memory 14 stores data D1 that determines the relationship between the height of the fork 6 and the input signals at the input terminals T₁-T₃. The data D1 includes combinations of high (H) and low (L) signals from the input terminals T₁-T₃, in accordance with the three height zones of the forklift 6 (low zone, middle zone, high zone). When the fork 6 and the inner masts 3b are in the low zone, the levers 8 of both sensors 7 are engaged and pivoted by the inner masts 3b. This disengages the detection plates 8b of the sensors 7 from the detection members 10a and connects the terminals 20 of the switches SW₁, SW₂ to a first contact point 21a. As a result, the combination of the signals from the input terminals T₁-T₃ is low, high, high, respectively. When the fork 6 and the inner masts 3b are in the middle zone, only the lever 8 of the lower sensor 7 is disengaged from the inner mast 3b, and the detection plate 8b is connected to the detection portion 10a. This connects the terminal 20 of the lower switch SW₁ to the second contact point 21b and connects the terminal 20 of the upper switch SW₂ to the first contact point 21b. As a result, the combination of the signals from the input terminals T₁-T₃ is high, low, high, respectively. When the fork 6 and the inner masts 3b are in the high zone, the levers 8 of both sensors 7 are disengaged from the associated inner mast 3b. This connects the terminals 20 of the switches SW₁, SW₂ to the second contact points 21b. As a result, the combination of the signals from the input terminals T₁-T₃ is high, high, low, respectively.

The CPU 13 controls the forklift in accordance with the height of the fork 6. However, the CPU 13 judges which zone (low, middle, and high) the fork 6 is in by reference to the data D1. When the combination of the signals does not correspond to any of the data D1, the CPU 13 judges that there is a cut wire or a short circuit in the electrical system of the position detector.

When the signal line SL₁ of the first input terminal is cut, the signal at the first input terminal T₁ is continuously high since the first signal line SL₁ is not grounded. Accordingly, when the fork 6 is in the low zone, the combination of the signals from the input terminals T₁-T₃ is high, high, high. Then, the CPU 13 judges that there is an abnormality. When the first signal line SL₁ is short-circuited, that is, when the first signal line SL₁ is cut and connected to the mast 3, the potential at the first input terminal T₁ is continuously low. Accordingly, when the fork 6 is in the middle or high zones, the combination of signals from the input terminals T₁-T₃ is low, low, high or low, high, low. Then, the CPU 13 judges that there is an abnormality. In this way, it is detected if the first signal line SL₁ is cut or short-circuited.

Likewise, when the first and second signal lines SL₁, SL₂ are both cut or short-circuited, an abnormality is detected. When the connecting line L is cut, the signals from the input terminals T₁, T₂ are always high. This condition is not in the data D1 when the fork 6 is at the middle or high position. Thus, the CPU 13 finds the abnormality. When the connecting line L is short-circuited, the signals of the input terminals T₁, T₂ are low or high in accordance with the state of the upper switch SW₂. This is also not in the data D1 when the fork 6 is at the low position. Therefore, the CPU 13 judges that there is an abnormality. When the switches SW₁, SW₂ are in disorder, the combination of the signals are not in the data D1 and the abnormality causing the disorder is detected.

The CPU 13 controls the vehicle in accordance with the height of the fork 6. However, when the CPU judges that there is an abnormality, the fork 6 is judged to be in the high zone regardless of its actual position. When the fork is at the highest position, the center of gravity of the vehicle is high, and the rear axle is restricted to stabilize the vehicle. Until a signal reporting correction of the disorder is input, the CPU 13 controls the vehicle as if the fork 6 is at the high position. The CPU 13 activates a reporting device 25 located in the driver's compartment to notify the driver that there is an abnormality. For example, a buzzer or a warning lamp is used as the reporting device 25.

The present embodiment has the following advantages.
(1) The height of fork 6 is detected with reference to the predetermined data D1 by the combination of signals at each input terminal T₁-T₃, which varies with the state of the switches SW₁, SW₂. When the combination of the signals does not correspond to the data D1, it is judged that there is an abnormality. Therefore, detection of the height of the fork 6 is ensured and a cut or a short-circuited wire at any portion of the signal lines SL₁ to SL₃ or the connecting line L is quickly detected. Malfunctions of the switches SW₁, SW₂ are also detected in the same way. Accordingly, substantially all the disorders in the electrical system of the position detector are detected.
(2) The second contact point 21b of the lower switch SW₁ is connected to the terminal 20 of the upper switch SW₂ by the connecting line L. Therefore, each of the three positions has a different combination of signals. Further, the number of signal lines is three, which is larger than the number of the switches SW₁, SW₂ by one. Accordingly, the number of signal lines is reduced as much as possible and the number of input terminals to the controller 11 is also reduced. As a result, the likelihood of a cut wire or a short-circuit is reduced. The connecting line L is necessary for connecting the switch SW₁ and the switch SW₂, but the length of the connecting line L need only extend between the switches SW₁ and SW₂.
(3) The terminal 20 of the switch SW₁ is grounded to the outer mast 3a, thus the terminal 20 has a ground potential. Therefore, there is no need for wiring from a power source like batteries to the switch SW₁.

The present invention will further be embodied as follows. Instead of detecting three positions of the fork 6 by two switches 10, more than four positions may be detected by more than three switches 10. For example, in the second embodiment shown in Fig. 6, (n+1) positions are detected by n (n≧3) switches SW₁-SWₙ.

The terminal 20 of the lowest switch SW₁ in the lowest sensor 7 is grounded to the outer mast 3a, the first contact point 21a is connected to the input terminal T₁ of the controller 11, and the second contact point 21b is connected to the terminal 20 of the consecutively higher switch SW₂. This series-style connection also applies to SW₂ to SWₙ. The first contact point 21a is connected to the input terminals T₁-Tₙ of the controller 11, and the second contact point 21b is connected to the terminal 20 of the consecutively higher switch. In the highest switch SWₙ of the uppermost sensor 7, the second contact point 21b is connected to the input terminal Tₙ₊₁ of the controller 11.

Accordingly, the number of the signal lines for connecting n switches SW₁-SW₂ to the controller 11 is n+1. The total length of the connecting lines L₁-Lₙ₋₁, which connect each switch SW₁-SWₙ, is substantially the same as that of the outer mast 3a. The number of input terminals for the controller 11 is n+1.

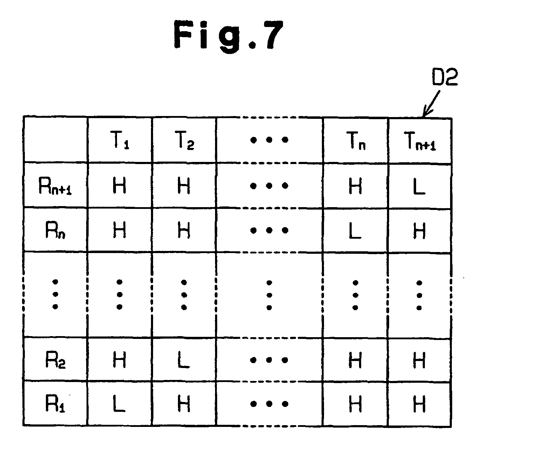

The memory 14 stores the data D2 shown in Fig. 7. In the data D2, (n+1) height zones R₁-Rₙ₊₁, which are obtained by dividing the moving range of the fork 6 by (n+1), are set. The combinations of signals corresponding to each height R₁-Rₙ₊₁ are set. The combinations of the signals from the input terminals T₁-Tₙ are all different in accordance with the zones R₁-Rₙ₊₁. For example, in the height Rₙ, which is nth from the bottom, the signal applied to the input terminal Tₙ is low (L), and the other signals at the other input terminals are all high (H).

Like the first embodiment, when the combination of signals from the input terminals T₁-Tₙ is not in the data D2, abnormalities, like cut or short-circuited signal lines SL₁-SLₙ₊₁ or connecting lines L₁-Lₙ₋₁, are detected. Further, malfunctions of the switches SW₁-SWₙ are also detected.

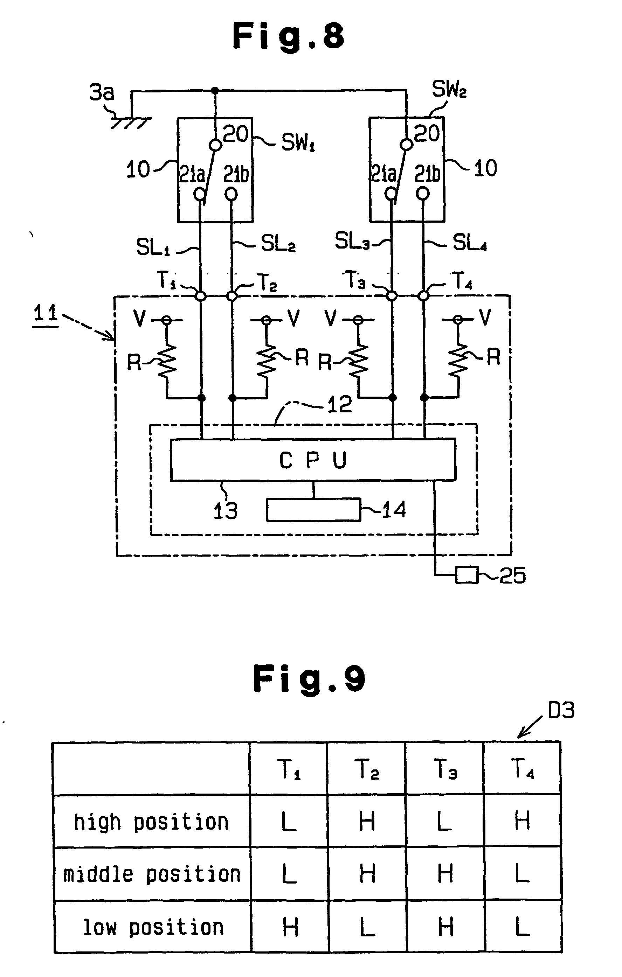

In a third embodiment shown in Fig. 8, the first contact point 21a and the second contact point 21b may be connected to the input terminals T₁-T₄ of the controller 11 by corresponding signal lines SL₁-SL₄. The terminal 20 of each switch 10 is grounded to the outer mast 3a. The memory 14 stores the data D3 shown in Fig. 9. The combinations of signals under normal conditions are represented by the data D3. The CPU 13 judges the zone to which the height of the fork 6 belongs in reference to data D3 by the combination of signals from the input terminals T₁-T₄. When the combination of the signals from input terminals T₁-T₄ is not in the data D3, the CPU 13 judges that there is an abnormality.

Like the first and second embodiments, a cut or a short-circuit in any signal line SL₁-SL₄ or a malfunction of any of the switches SW₁, SW₂ will be detected. Fig. 8 shows two switches 10, however, more than three switches may be used.

Further, two positions may be detected by one switch.
The position detector of the present invention is not limited to detecting the height of a fork. The present invention may be used to detect other position parameters. For example, the present invention may be used to detect the inclination angle of the mast 3 or the reach of fork 6 using incremental zones. The position detector of the present invention may be configured to measure rotational movement.

The height sensor 7 may simply be a switch without the lever 8 and the housing 7a. In this case, a cover is preferably provided for protection.

The switches 10 are not limited to the contact point type, they may also be a non-contact point type. Non-contact point type switches have a similar performance.

The arrangement of the switches 10 to the mast 3 is not limited to that shown in the figures 1 and 6. In other words, the switch having a grounded terminal 20 may be located at the highest position of the mast 3, and the other switches may be consecutively arranged below it along the mast 3. In this case, the same data in Figs. 2, 7, 9 can be used by arranging the detection plates 8b to depress the associated switch 10 when the lever 8 of the sensor 7 pivots clockwise, which is opposite to the arrangement of Fig. 4.

The terminal 20 of the lower switch SW₁ does not have to be grounded. The first terminal may be wired to a power source, and plus or minus potential may be applied to the terminal 20 of the lower switch SW₁.

The present invention may be applied to industrial vehicles other than the forklift 1, such as shovel loader, backhoe, and high elevation vehicle.

It should be apparent to those skilled in the art that the present invention may be embodied in many other specific forms without departing from the spirit or scope of the invention. Therefore, the present examples and embodiments are to be considered as illustrative and not restrictive and the invention is not to be limited to the details given herein, but may be modified within the scope and equivalence of the appended claims.

An apparatus in a forklift (1) for detecting the height of a fork (6) in stages. Two sensors (7) are arranged longitudinally on the mast (3). Each sensor (7) includes a switch (10) that has two states. The state of each switch can be changed by movement of the fork. Each switch (10) is connected to input terminals (T₁-T₃) of a controller (11). The signal at each input terminal changes between two levels in accordance with the state of a corresponding switch (10). A memory (14) in the controller (11) stores data that defines the relationship between ranges of movement of the fork (6), or zones, and the combination of the signals. The controller (11) judges the height of the fork (6) when the combination of signals corresponds to a combination that exists in the data. The controller (11) judges that there is an abnormality when the combination does not exist in the data. This permits detection of malfunctioning switches and a cut and a short-circuited wiring.

## Claims

1. An apparatus for detecting the position of a movable body **(6)** provided on an industrial vehicle **(1)**, wherein the movable body moves on a predetermined path, and the apparatus detects the passage of the movable body on the path, the apparatus comprising
a switch **(10)** or a plurality of switches **(10)**, each switch having two states, wherein each switch is associated with a location on the path, and passage of the movable body by the location changes the state of the associated switch;
**characterized by**
a position judging means **(11)** having a plurality of input terminals **(T**_{**1**}**-T**_{**n+1**}**),** the number of the plurality of input terminals being more than the number of switches by at least one, wherein each switch is connected to at least one of the plurality of input terminals, and each of the plurality of input terminals is associated with the switch or one of the switches, wherein signals at the input terminals have two states in accordance with the state of the associated switch, the judging means including position judging data, wherein a relationship between zones of movement of the movable body and combinations of signal states at the input terminals is defined by the data, wherein the judging means judges that the position of the movable body is within one of the zones in accordance with the data when the combination of the signals at the input terminal exists in the data, and the judging means judges that there is an abnormality when the combination of signals at the input terminal does not exist in the judging data.

2. The apparatus according to claim 1, **characterized in that** the industrial vehicle is a forklift **(1)**, the forklift including a mast **(3)**, wherein the movable body is supported by the mast to ascend and descend, wherein the switch is or the switches are provided on the mast.

3. The apparatus according to claim 1, **characterized in that** the number of switches is two or more, one of the switches being a first switch, one of the switches being a last switch, each switch including one switch terminal **(20)**, and first and second contact points **(21a, 21b)**, the first and second contacts points being selectively connected to their associated switch terminal in accordance with the position of the movable body, wherein the switch terminal of the first switch has a predetermined potential, and each second contact point, except for that of the last switch, is electrically connected to the switch terminal of an adjacent one of the switches, each first contact point being connected to a corresponding one of the plurality of input terminals, wherein the second contact point of the last switch is connected to a corresponding one of the input terminals.

4. The apparatus according to claim 3, **characterized in that** the industrial vehicle is a forklift **(1)**, the forklift including a mast **(3)**, wherein the movable body is supported by the mast to ascend and descend, wherein the switches are arranged consecutively along the mast, and the states of the switches are changed in accordance with the position of the movable body.

5. The apparatus according to claim 3, **characterized in that** the switch terminal of the first switch is grounded and a voltage is applied to each input terminal.

6. The apparatus according to claim 1, **characterized in that** the judging means includes a storage means **(14)** for storing position judging data.

## Patentansprüche

1. Gerät zum Feststellen einer Position eines beweglichen Körpers (6), der auf einem Industriefahrzeug (1) vorgesehen ist, wobei sich der bewegliche Körper auf einem vorbestimmten Weg bewegt und das Gerät den Durchgang des beweglichen Körpers auf dem Weg feststellt, mit
einem Schalter (10) oder einer Vielzahl von Schaltern (10), wobei jeder Schalter zwei Schaltzustände aufweist, wobei jeder Schalter einem Ort auf dem Weg zugehörig ist, und ein Durchgang des beweglichen Körpers durch den Ort den Zustand des zugehörigen Schalters ändert;
**gekennzeichnet durch**
ein Positionsbeurteilungsmittel (11) mit einer Vielzahl von Eingangsanschlüssen (T₁ - Tₙ₊₁), wobei die Anzahl der Vielzahl von Eingangsanschlüssen um wenigstens Eins höher ist als die Anzahl von Schaltern, wobei jeder Schalter mit wenigstens einem der Vielzahl von Eingangsanschlüssen verbunden ist und jeder der Vielzahl von Eingangsanschlüssen dem Schalter oder einem der Schalter zugehörig ist, wobei Signale an den Eingangsanschlüssen zwei Zustände entsprechend dem Zustand des zugehörigen Schalters aufweisen, wobei das Beurteilungsmittel über Positionsbeurteilungsdaten verfügt, wobei eine Beziehung zwischen Bewegungszonen des beweglichen Körpers und Kombinationen von Signalzuständen an Eingangsanschlüssen **durch** die Daten festgelegt sind, wobei das Beurteilungsmittel beurteilt, daß die Position des beweglichen Körpers innerhalb einer der Zonen gemäß den Daten liegt, wenn die Kombination der Signale am Eingangsanschluß in den Daten vorhanden ist, und das Beurteilungsmittel beurteilt, daß es eine Anomalität gibt, wenn die Kombination der Signale am Eingangsanschluß nicht in den Beurteilungsdaten vorhanden ist.

2. Gerät nach Anspruch 1, **dadurch gekennzeichnet, daß** das industrielle Fahrzeug ein Gabelstapler (1) ist, der über einen Mast (3) verfügt, wobei der bewegliche Körper vom Mast gestützt ist, um hoch- und runterzufahren, wobei der Schalter oder die Schalter auf dem Mast vorgesehen sind.

3. Gerät nach Anspruch 1, **dadurch gekennzeichnet, daß** die Anzahl der Schalter zwei oder mehr beträgt, wobei einer der Schalter ein erster Schalter ist, einer der Schalter ein letzter Schalter ist, wobei jeder Schalter einen Schaltanschluß (20) sowie erste und zweite Kontaktpunkte (21a, 21b) enthält, wobei die ersten und zweiten Kontaktpunkte selektiv mit ihren zugehörigen Schaltanschlüssen gemäß der Position des beweglichen Körpers verbindbar sind, wobei der Schaltanschluß des ersten Schalters ein vorbestimmtes Potential aufweist, und jeder zweite Kontaktpunkt, mit Ausnahme desjenigen vom letzten Schalter, elektrisch mit dem Schaltanschluß eines benachbarten Schalters verbunden ist, wobei jeder erste Kontaktpunkt mit einem zugehörigen der Vielzahl von Eingangsanschlüssen verbunden ist, wobei der zweite Kontaktpunkt vom letzten Schalter mit einem zugehörigen der Eingangsanschlüsse verbunden ist.

4. Gerät nach Anspruch 3, **dadurch gekennzeichnet, daß** das industrielle Fahrzeug ein Gabelstapler (1) ist, der einen Mast (3) hat, wobei der bewegliche Körper vom Mast gestützt ist, um hoch- und runterzufahren, wobei die Schalter längs des Mastes aufeinanderfolgend angeordnet sind und sich die Zustände der Schalter gemäß der Position des beweglichen Körpers ändern.

5. Gerät nach Anspruch 3, **dadurch gekennzeichnet, daß** der Anschluß des ersten Schalters mit Masse verbunden ist und eine Spannung an jedem Eingangsanschluß anliegt.

6. Gerät nach Anspruch 1, **dadurch gekennzeichnet, daß** das Beurteilungsmittel über ein Speichermittel (14) zum Speichern von Positionsbeurteilungsdaten verfügt.

## Revendications

1. Appareil permettant de détecter la position d'un corps mobile (6) prévu sur un véhicule industriel (1), dans lequel le corps mobile se déplace suivant un trajet prédéterminé, et l'appareil détecte le passage du corps mobile sur le trajet, l'appareil comprenant :
un commutateur (10) ou une pluralité de commutateurs (10), chaque commutateur ayant deux états, dans lequel chaque commutateur est associé à un emplacement sur le trajet, et le passage du corps mobile près de l'emplacement change l'état du commutateur associé ;
**caractérisé par**
un moyen d'estimation de position (11) ayant une pluralité de bornes d'entrée (T₁-Tₙ₊₁), le nombre de la pluralité de bornes d'entrée étant supérieur au nombre de commutateurs d'au moins un, dans lequel chaque commutateur est connecté à au moins l'une de la pluralité de bornes d'entrée, et chacune de la pluralité de bornes d'entrée est associée avec le commutateur ou l'un des commutateurs, dans lequel des signaux au niveau des bornes d'entrée ont deux états, en fonction de l'état du commutateur associé, le moyen d'estimation comportant des données d'estimation de position, dans lequel une relation entre des zones de mouvement du corps mobile et des combinaisons d'états de signal au niveau des bornes d'entrée est définie par les données, dans lequel le moyen d'estimation estime que la position du corps mobile se trouve à l'intérieur de l'une des zones, selon les données, lorsque la combinaison des signaux au niveau des bornes d'entrée existe dans les données, et le moyen d'estimation estime qu'il existe une anomalie, lorsque la combinaison des signaux au niveau de la borne d'entrée n'existe pas dans les données d'estimation.

2. Appareil selon la revendication 1, **caractérisé en ce que** le véhicule industriel est un chariot élévateur à fourche (1), le chariot élévateur à fourche incluant un mât (3), dans lequel le corps mobile est supporté par le mât pour monter et descendre, dans lequel le commutateur est, ou les commutateurs sont prévu(s) sur le mât.

3. Appareil selon la revendication 1, **caractérisé en ce que** le nombre de commutateurs est de deux ou plus, l'un des commutateurs étant un premier commutateur, l'un des commutateurs étant un dernier commutateur, chaque commutateur incluant une borne de commutateur (20), et des premier et second points de contact (21a, 21b), les premier et second points de contact étant connectés, de manière sélective, à leur borne de commutateur associée, en fonction de la position du corps mobile, dans lequel la borne de commutateur du premier commutateur a un potentiel prédéterminé, et chaque second point de contact, à l'exception du dernier commutateur, est connecté, électriquement, à la borne de commutateur d'un commutateur adjacent parmi les commutateurs, chaque premier point de contact étant connecté à une borne correspondante de la pluralité de bornes d'entrée, dans lequel le second point de contact du dernier commutateur est connecté à une borne correspondante des bornes d'entrée.

4. Appareil selon la revendication 3, **caractérisé en ce que** le véhicule industriel est un chariot élévateur à fourche (1), le chariot élévateur à fourche incluant un mât (3), dans lequel le corps mobile est supporté par le mât pour monter et descendre, dans lequel les commutateurs sont agencés à la suite les uns des autres le long du mât, et les états des commutateurs sont modifiés en fonction de la position du corps mobile.

5. Appareil selon la revendication 3, **caractérisé en ce que** la borne de commutateur du premier commutateur est reliée à la terre et une tension est appliquée à chaque borne d'entrée.

6. Appareil selon la revendication 1, **caractérisé en ce que** le moyen d'estimation inclut un moyen de stockage (14) afin de stocker les données d'estimation de position.
